# EUROPÄISCHE PATENTSCHRIFT

(11) **EP 1 719 224 B1**
(45) Veröffentlichungstag und Bekanntmachung des Hinweises auf die Patenterteilung: **23.01.2008**
(21) Anmeldenummer: 04739471.3
(22) Anmeldetag: 29.05.2004
(51) Int. Cl.: H02B 1/01

(54) **BAUSATZ ZUM ERSTELLEN VON RAHMENAUFBAUTEN F R SCHALTSCHR&Aum l;NKE**
KIT FOR PRODUCING A FRAME SUPERSTRUCTURE FOR SWITCHGEAR CABINETS
JEU DE PIECES DETACHEES PERMETTANT LA CONSTRUCTION D'UNE SUPERSTRUCTURE DE CHASSIS POUR ARMOIRES ELECTRIQUES

(30) Priorität: 13.02.2004 DE 202004002351 U
(43) Veröffentlichungstag der Anmeldung: 08.11.2006
(73) Patentinhaber: Rittal GmbH & Co. KG, 35745 Herborn (DE)
(72) Erfinder: HARTEL, Marc, 35447 Reiskirchen (DE); DAHMER, Ralf, 57462 Olpe (DE)
(74) Vertreter: Jeck, Anton
(86) Internationale Anmeldenummer: PCT/EP2004/005860
(87) Internationale Veröffentlichungsnummer: WO 2005/083856

(56) Entgegenhaltungen:
- EP-A- 0 151 478
- EP-A- 0 762 819
- EP-A- 0 834 974
- DE-A- 19 837 184
- US-A- 5 228 762

## Beschreibung

Die Erfindung betrifft einen Bausatz zum Erstellung von Rahmenaufbauten für Schaltschränke.

Rahmenaufbauten für Schaltschränke mit vorgegebener Breite, Tiefe und Höhe sind in verschiedener Ausgestaltung bekannt. Dabei können zwölf Rahmenprofile in den vier Eckbereichen des Rahmenaufbaus mittels Eckverbindern miteinander zu einem festen oder lösbaren Rahmengestell verbunden sein.

Wie die EP 0 076 819 A zeigt, können vier vertikale Rahmenprofile über eine Abdeckung als Bodeneinheit und eine Abdeckung als Deckeinheit zu einem Rahmenauf bau miteinander verbunden werden.

Dabei ermöglicht der Rahmenaufbau mit den Befestigungsaufnahmen der vertikalen Rahmenprofile den Einbau zusätzlicher Montageschienen.

Bei den bekannten Rahmenaufbauten bestimmen die Einbaubedingungen sehr stark die Ausgestaltung der verwendeten Rahmenschenkel.

Es ist Aufgabe der Erfindung, einen Bausatz zum Erstellen von Rahmenaufbauten für Schaltschränke zu schaffen, der wenige einfache Baueinheiten umfasst und dennoch an die unterschiedlichsten Einbaubedingungen angepasst werden kann.

Zur Lösung dieser Aufgabe wird ein Bausatz geschaffen, der besteht aus:
a) einem Schrank-Rahmengestell (30) aus vier horizontalen Breitenstreben (31), vier horizontalen Tiefenstreben (32) sowie vier vertikalen Rahmenschenkeln (33) mit vorgegebener Breite, Tiefe und Höhe,
b) zwei Vertikalrahmen (10) aus jeweils zwei horizontalen Rahmenbreitenstreben (12) und jeweils zwei vertikalen Rahmenprofilen (11), die in ein Schrank-Rahmengestell (30) einbaubar und mit dessen Tiefenstreben (32) verbindbar sind und
c) Abdeckelementen (20), die als Bodenelement und Deckenelement mit zwei beabstandeten Vertikalrahmen (10) zu einem eigenständigen Basis-Rahmengestell (60) verbindbar sind,
d) wenigstens einer Schranktür (80), die an den Abdeckelementen (20) anscharnierbar ist und die an ihrem Umfang abgekantet ist.

Das Schrank-Rahmengestell kann schon allein in bekannter Weise zum Aufbau eines normalen Schaltschrankes verwendet werden, der mittels einer Schranktüre und Verbindungselementen verschließbar ist.

In dieses Schrank-Rahmengestell können aber auch zwei Vertikalrahmen eingebaut werden, die für einen Einbau von z.B. 19"-Einbauten mit unterschiedlicher Einbautiefe verwendet werden.

Schließlich können zwei derartige Vertikalrahmen mit zwei Abdeckelementen zu einem eigenständigen Basis-Rahmengestell verbunden werden, in das derartige Einbauten eingesetzt werden können, wobei eine einfache Anpassung auf unterschiedliche Einbautiefen dieser Einbauten möglich ist. Dieses eigenständige Basis-Rahmengestell lässt sich mittels Schranktüre und vertikalen Seitenverkleidungselementen zu einem Basis-Rahmengestell zusammenbauen, das ganz anderen Einbaubedingungen angepasst sein kann und zu einem vollkommen eigenständigen Schaltschrank vervollständigt werden kann. Auf diese Weise ist es möglich, mit zwei zusätzlichen einfachen Bauteilen die Variationsmöglichkeiten für die Erstellung von Rahmenaufbauten beachtlich zu erhöhen und damit die Lagerhaltung an Schaltschränken für unterschiedliche Einbaubedingungen wesentlich zu reduzieren.

Das Schrank-Rahmengestell als Baueinheit des Bausatzes kann dabei so ausgebildet sein, dass die Breitenstreben, die Tiefenstreben und die Rahmenschenkel des Schrank-Rahmengestelles Abschnitte jeweils aus identischen Profilen gebil-det sind, die in den Eckbereichen des Schrank-Rahmengestelles mittels Eckver-binder fest miteinander verbunden, z.B. verschweißt sind. Die Ausbildung kann jedoch auch so gewählt werden, dass die Breitenstreben und die Tiefenstreben des Schrank-Rahmengestelles einen festen Bodenrahmen und einen festen Deckenrahmen bilden und dass in den Eckbereichen des Bodenrahmens und des Deckenrahmens die vertikalen Rahmenschenkel angebracht sind und mit den Eckverbindern und dem Boden- und Deckenrahmen eine durchgehende Außen-aufnahme bilden.

Für die als Vertikalrahmen ausgebildeten Baueinheiten des Bausatzes ist nach einer Ausgestaltung vorgesehen, dass die vertikalen Rahmenprofile der Vertikalrahmen eine Basisprofilseite mit mindestens einer Reihe von Befestigungsaufnahmen aufweisen, die mit den Stirnseiten der horizontalen Rahmenbreitenstreben abschließen und dass an der Basisprofilseite beidseitig Seitenschenkel abgekantet sind, die auf die Längsseiten der zugeordneten horizontalen Rahmenbreitenstreben der Vertikalrahmen ausgerichtet und mit diesen verbunden sind. Dabei können die vertikalen Rahmenprofile des Vertikalrahmens so ausgebildet sein, dass in der Basisprofilseite und in den abgekanteten Seiten-schenkeln der vertikalen Rahmenprofile der Vertikalrahmen jeweils mindestens eine Reihe von identischen Befestigungsaufnahmen in einheitlicher, aufeinander ausgerichteter Teilung eingebracht sind, oder dass in der Basisprofilseite und in den abgekanteten Seitenschenkeln der vertikalen Rahmenprofile der Vertikalrahmen jeweils mindestens eine Reihe von gleichen oder identischen Befestigungsaufnahmen in gleicher oder unterschiedlicher Teilung eingebracht sind.

Die Baueinheit der Vertikalrahmen besitzt dann eine ausreichende Festigkeit und Verwindungssteifigkeit und damit eine bleibende Ausrichtung der Teile des Vertikalrahmens, wenn vorgesehen ist, dass die horizontalen Rahmenbreitenstreben und die vertikalen Rahmenprofile der Vertikalrahmen in den Eckbereichen fest miteinander verbunden, z.B. verschweißt sind.

Damit zwei Vertikalrahmen mit zwei Abdeckelementen zu einem Basis-Rahmengestell auf einfache Weise verbunden werden können, sieht eine Ausgestaltung vor, dass die plattenförmigen Abdeckelemente auf zwei einander gegenüberliegenden Seiten rechtwinklig abgekantete Befestigungsränder mit mindestens einer Reihe von Befestigungsaufnahmen aufweisen und dass die vertikalen Rahmenprofile von zwei Vertikalrahmen mit ihren Basisprofilseiten mit den Innenseiten der Befestigungsränder der Abdeckelemente in unterschiedlichen Abständen zu einem Basis-Rahmengestell miteinander verbindbar sind.

Ein Einbau der Vertikalrahmen in eine als Schrank-Rahmengestell gebildete Baueinheit wird dadurch erleichtert, dass die horizontalen Rahmenbreitenstreben der Vertikalrahmen mit Kabeleinführungs-Durchbrüchen versehen sind und dass die beiden Vertikalrahmen über Befestigungsaufnahmen der horizontalen Rahmenbreitenstreben mit den zugekehrten Oberseiten der horizontalen Tiefenstreben des Schrank-Rahmengestelles in verschiedenen Abständen zueinander verbindbar sind.

Sind die Vertikalrahmen Teil eines Basis-Rahmengestelles, dann ist für die Einführung von Kabeln über das Bodenelement oder das Deckenelement vorgesehen, dass die Abdeckelemente in ihren Grundplatten über den horizontalen Rahmenbreitenstreben der Vertikalrahmen im Basis-Rahmengestell mit Kabeleinführungs-Aussparungen versehen sind.

Für die Anbringung von Seitenwänden und einer Schranktüre an das Basis-Rahmengestell ist eine Ausgestaltung von Vorteil, die dadurch gekennzeichnet ist, dass die Befestigungsränder der Abdeckelemente an ihren freien Kanten nach außen abgekantete Verbindungsstege tragen und dass die Grundplatte der Abdeckelemente über die Befestigungsränder vorstehen und mit den Verbindungsstegen Aufnahmen zum Anbringen von Seitenwänden am Basis-Rahmengestell bilden, sowie dass die Grundplatten der Abeckelemente an den senkrecht zu den Befestigungsrändern verlaufenden Seiten vorstehen und Abkantungen aufweisen, an denen eine Schranktüre anlenkbar und verschließbar ist sowie eine Rückwand befestigbar ist.

Der Aufbau des Schrank-Rahmengestelles kann dadurch vereinfacht werden, dass die Grundplatten der Abdeckelemente mit einem zentrischen Durchbruch und in den Eckbereichen mit Befestigungsbohrungen versehen sind. Dabei ist die Anbringung der vertikalen Rahmenschenkel an dem Bodenrahmen und dem Deckenrahmen so gelöst, dass die vertikalen Rahmenschenkel des Schrank-Rahmengestelles einen Profilteil mit einer Steckaufnahme für das Steckteil der Eckverbinder aufweisen, wobei das Profilteil mit der Außenkontur die Außenaufnahme bildet, die symmetrisch zur Diagonalebene des Boden- und des Deckenrahmens ausgebildet ist und die Außenaufnahme in den Eckbereichen des Schrank-Rahmengestelles lässt sich dadurch über die gesamte Höhe des Schrank-Rahmengestelles einhalten, dass der Boden- und der Deckenrahmen des Schrank-Rahmengestelles Eckaufnahmen aufweisen, in die die Eckverbinder mit einem Füllteil einsetzbar und mit dem Boden- bzw. dem Deckenrahmen ver-bindbar sind, wobei die Füllteile der Eckverbinder mit ihren Außenkonturen die Außenaufnahmen der vertikalen Rahmenprofile des Schrank-Rahmengestelles über den Boden- und den Deckenrahmen hinaus verlängern.

Die vertikalen Rahmenschenkel lassen sich bei unsymmetrischem Querschnitt mit vertauschten Stirnseiten am Bodenrahmen oder am Deckenrahmen abstützend befestigen, wenn vorgesehen ist, dass die vertikalen Rahmenprofile des Schrank-Rahmengestelles mit ihren Stirnseiten auf den einander zugekehrten Seiten des Boden- und des Deckenrahmens und der Füllteile der Eckverbinder aufstehend mit dem Boden- und dem Deckenrahmen verbunden sind.

Die vertikalen Rahmenschenkel des Schrank-Rahmengestelles lassen sich dadurch zur Zuführung von Anschluss- und Verbindungskabeln ausnützen, dass die vertikalen Rahmenprofile des Schrank-Rahmengestelles zwischen dem Boden- und dem Deckenrahmen eine zum Innenraum des Schrank-Rahmengestelles hin offenen Kanal bilden, der mittels eines Kastenprofils verschließbar ist, und dass dieses Kastenprofil Vertikalkanäle aufweist und in der Abschlusswand mit Reihen von Bohrungen versehen ist. Das Kastenprofil kann dabei nicht benötigte Kanäle der vertikalen Rahmenschenkel des Schrank-Rahmengestelles verschließen. Der Verschluss des Kanals wird dabei dadurch optimal, dass die Abschlusswand des Kastenprofils mit Abdeckstegen den Kanal im vertikalen Rahmenprofil des Schrank-Rahmengestelles überdeckt.

Weitere Befestigungsmöglichkeiten an den vertikalen Rahmenschenkeln des Schrank-Rahmengestelles werden dadurch geschaffen, dass die den Kanal bildende Profilseite des vertikalen Rahmenprofils auf der Außenseite der freien Profilseite angeformte Verbindungsstege trägt.

Gemäß einer bevorzugten Ausgestaltung der Erfindung kann es vorgesehen sein, dass die Schranktüre mit einem abgekanteten Rand versehen ist, der in den Eckbereichen der Scharnierseite der Schranktüre Scharnierelemente mit den in die Lageraufnahmen der Abdeckelemente des Basis-Rahmengestelles einführbaren Scharnierbolzen aufnimmt, und dass die Scharnierbolzen in den Scharnierelementen axial begrenzt verstellbar und zumindest in der Eingriffsstellung mit der zugekehrten Lageraufnahme oder Lagerbuchse an der Abkantung der Abdeckelemente unverschiebbar festlegbar sind.

Damit werden die für die Anlenkung der Schranktüre an dem Rahmengestell anbringbaren Scharnierelemente überflüssig, da deren Aufgabe von den Lageraufnahmen an den Abkantungen der Abdeckelemente des Rahmengestelles übernommen wird. Es sind nur noch die an der Schranktüre anzubringenden Gegenscharnierelemente mit den Scharnierbolzen erforderlich. Die Scharnierelemente lassen eine leichte Montage/Demontage der Schranktür am Rahmengestell zu.

Das Rahmengestell erleichtert die Anlenkung der Schranktüre dadurch, dass die Befestigungsränder der Abdeckelemente mit ihren Endkanten um mindestens einen Betrag gegenüber den abgekanteten Rändern zurückgesetzt sind, der mindesten der Abmessung der ersten Türabkantung entspricht, die senkrecht zum Türblatt gerichtet ist. Auf diese Weise wird eine Art Aufnahme am Rahmengestell geschaffen, die die Schranktüre schwenkbar aufnehmen kann.

Die Drehlagerung der in den Scharnierelementen festgelegten Scharnierbolzen kann auf einfache Art dadurch verbessert werden, dass in die Lageraufnahmen in den abgekanteten Rändern der Abdeckelemente Lagerbuchsen eingesetzt sind.

Sieht man an beiden Endbereichen der abgekanteten Ränder der Abdeckelemente Lageraufnahmen oder Lagerbuchsen vor, dann kann zusätzlich vorgesehen sein, dass die Schließseite der Schranktüre manuell oder mittels eines Stangenverschlusses verstellbare Schließstangen trägt, die in die Lageraufnahmen oder Lagerbuchsen der abgekanteten Ränder der Abdeckelemente des Rahmengestelles einführbar und aus diesen herausführbar sind.

Eine denkbare Erfindungsalternative sieht vor, dass die Lageraufnahmen als Lagerbuchsen ausgebildet sind, die auf den einander zugekehrten Falzbereichen der doppelwandigen Ränder angeordnet sind. Damit ist auf einfache Weise ein stabiler Anbindungspunkt für die Türscharnierung geschaffen. Zudem bildet der Falz frontseitig einen gerundeten Abschluss der Abdeckelemente, der optisch ansprechend ist und die Gefahr einer Schnittverletzung ausschließt. Hierbei kann es insbesondere vorgesehen sein, dass die Lageraufnahmen als Lagerbuchsen ausgebildet sind, die auf den einander zugekehrten Falzbereichen der doppelwandigen Ränder angeordnet sind. Die Funktionalität des doppelwandigen Randes kann zusätzlich erweitert werden, wenn vorgesehen ist, das zumindest einer der doppelwandigen Ränder eine Abkantung aufweist, die in Richtung zum jeweils gegenüberliegenden Abdeckelement als Türanschlag vorsteht.

Die Erfindung wird anhand eines in den Zeichnungen dargestellten Ausführungsbeispiels näher erläutert. Es zeigen:
- Fig. 1: einen Vertikalrahmen als erste Baueinheit des Bausatzes in perspektivischer Ansicht.
- Fig. 2: eine perspektivische Teilansicht eines Eckbereiches des Vertikalrahmens nach Fig. 1,
- Fig. 3: in vergrößerter perspektivischer Ansicht ein als Bodenelement verwendetes Abdeckelement als zweite Baueinheit des Bausatzes,
- Fig. 4: in Explosionsdarstellung den Eckbereich eines Bodenrahmens mit Eckverbinder und vertikalem Rahmenschenkel eines Schra nk-Rah-mengestelles als dritte Baueinheit des Bausatzes,
- Fig. 5: eine Teilperspektive des vertikalen Rahmenschenkels mit einem mittels Kastenprofil verschließbaren Kanal,
- Fig. 6: perspektivisch den unteren Teil des Schrank-Rahmengestelles mit zwei eingebauten Vertikairahmen nach Fig. 1 und
- Fig. 7: in perspektivischer Ansicht ein aus zwei Vertikalrahmen nach Fig. 1 und zwei Abdeckelementen nach Fig. 3 zusammengesetztes Basis-Rahmengestell,
- Fig. 7b: ein alternatives Gestaltungsdetail des Abdeckelementes
- Fig. 8: ein Basis-Rahmengestell mit Seitenwänden und einer anscharnierten Schranktüre,
- Fig. 9: eine perspektivische Detailansicht mit dem unteren Eckbereich von Rahmengestell und Schaltschrank mit der angelenkten Schranktüre und
- Fig. 10: eine Skizze der Teilansicht nach Fig. 9 ohne Schranktüre

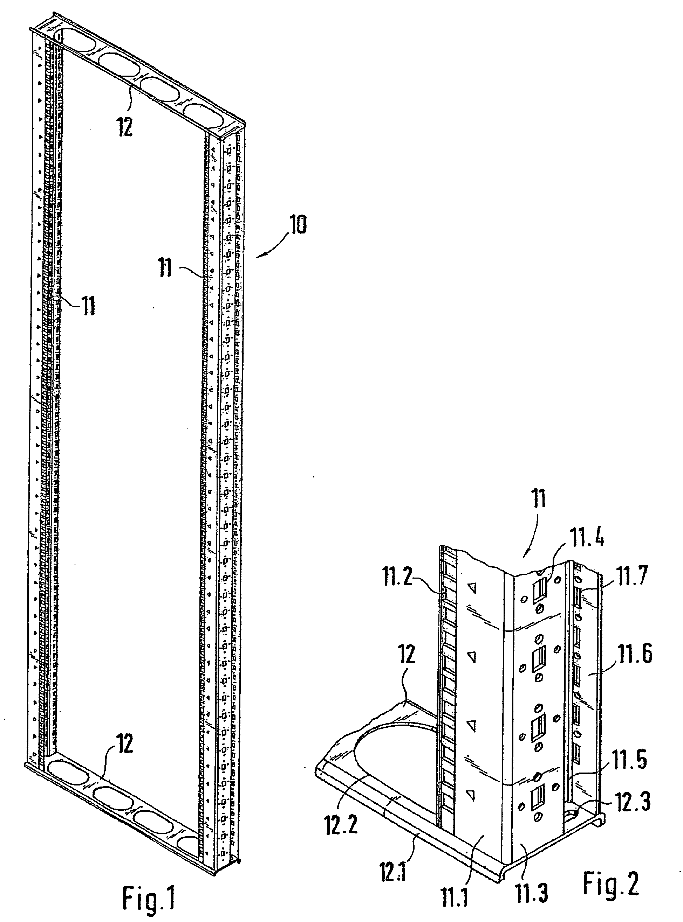

Der Vertikalrahmen 10 nach Fig. 1 bildet die erste Baueiheit des Bausatzes. Er besteht aus zwei vertikalen Rahmenprofilen 11 und zwei horizontalen Rahmenbreitenstreben 12. Dabei bilden die beiden Rahmenprofile 11 den einander zugekehrten Profilseiten 11.1 (Fig. 2) mit den Reihen von Befestigungsaufnahmen 11.2 eine Befestigungsebene, z.B. für 19"-Einbauten. Die Rahmenprofile 11 sind im Bereich der Stirnseiten mit den Enden der Rahmenbreitenstreben 12 fest verbunden, z.B. verschweißt. Die Profilseiten 11.1 der Rahmenprofile verlaufen parallel zu einer Längskante der Rahmenbreitenstreben 12, während die Profilseiten 11.3 mit den Stirnseiten der Rahmenbreitenstreben 12 abschließen. Schließlich schließen die Profilseiten 11.6 mit den anderen Längskanten der Rahmenbreitenstreben 12 ab. Die Profilseiten 11.3 und 11.6 sind mit mindestens einer Reihe von Befestigungsaufnahmen 11.4 und 11.7 versehen. Damit die beiden vertikalen Rahmenprofile 11 trotz unsymmetrischem Querschnitt identisch ausgebildet und für den Vertikalrahmen 10 verwendet werden können, sind sie mit vertauschten Stirnseiten an den Rahmenbreitenstreben 12 angebracht.

Die Rahmenbreitenstreben 12 können mit Kabeleinführungs-Durchbrüchen 12.2 versehen sein und mit abgekanteten Rändern 12.1 an den Längskanten versteift sein. Zudem können die Rahmenbreitenstreben 12 im Bereich der Stirnseiten mit Befestigungsaufnahmen 12.3 versehen sein, wie der Teilperspektive nach Fig. 2 zu entnehmen ist.

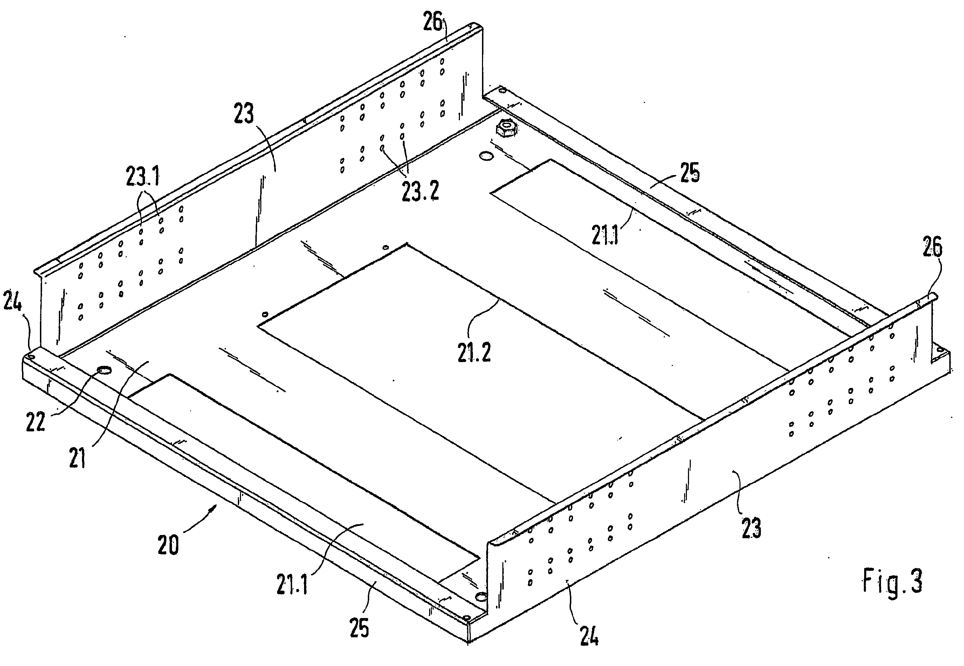

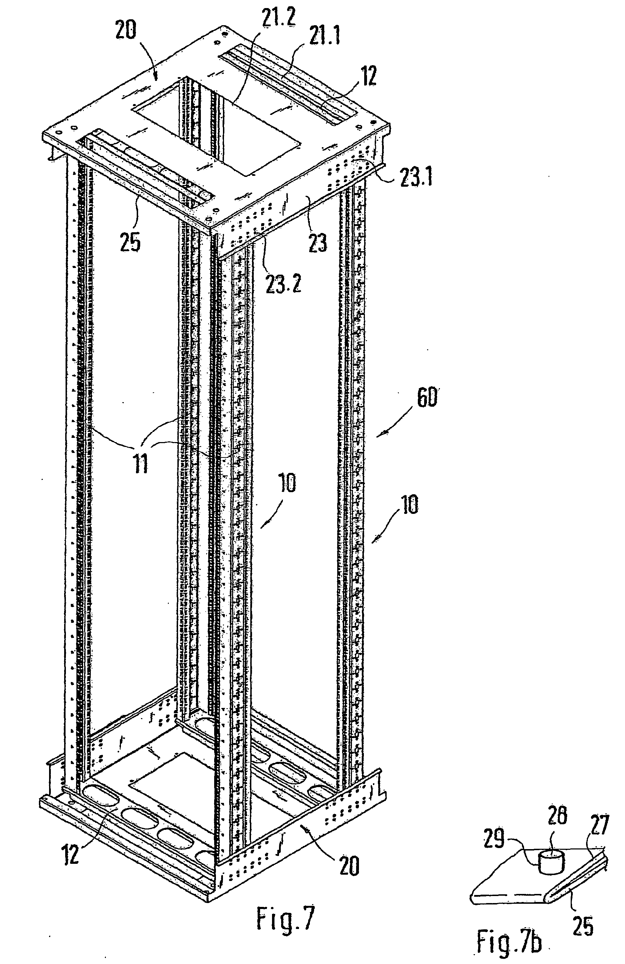

In Fig. 3 ist in vergrößerter Perspektive ein Abdeckelement 20 gezeigt, das zur Mittellängsebene, die parallel zu den abgekanteten Befestigungsrändern 23 verläuft, symmetrisch ausgebildet, so dass das Abdeckelement 20 sowohl als Bodenelement, als auch als Deckenelement für ein Basis-Rahmengestell 60 nach Fig. 7 verwendet werden kann. Dabei sind die Befestigungsränder 23 gegeneinander gerichtet. Die Befestigungsränder 23 tragen zwei Reihen von Befestigungsaufnahmen 23.1 und 23.2. Der Abstand der Innenseiten der beiden Befestigungsränder 23 eines Abdeckelementes 20 entspricht dem Außenmaß der Profilseiten 11.3 der beiden Rahmenprofile 11 eines Vertikalrahmens 10, so dass der Vertikalrahmen 10 über diese Profilseiten 11.3 mit den Befestigungsaufnahmen 11.4 mit den Innenseiten der Befestigungsränder 23 der Abdeckelemente 20 verbunden werden kann. Dabei verbinden ein unteres Abdeckelement 20 als Bodenelement und ein oberes Abdeckelement 20 als Deckenelement zwei beabstandete Vertikal rahmen 10 zu einem Basis-Rahmengestell 60 nach Fig. 7. Dabei können die Profilseiten 11.1 auf den einander abgekehrten Seiten der Vertikalrahmen 10 angeordnet sein. Dies lässt sich einfach durch eine um 180°-Verdrehung des zweiten Vertikalrahmens 10 erreichen.

Das Abdeckelement 20 weist eine Grundplatte 21 auf, die in den senkrecht zu den Befestigungsrändern 23 stehenden Randbereichen mit Kabeleinführungs-Durchbrüchen 21.1 versehen ist, die beim aufgebauten Basis-Rahmengestell 60 mit den Kabeleinführungs-Durchbrüchen 12.2 der Rahmenbreitenstreben 12 der Vertikalrahmen 10 zur Deckung kommen. Zudem kann die Grundplatte 21 des Abdeckelementes 20 mit einer zentrischen Aussparung 21.2 und in den Eckbereichen mit Befestigungsbohrungen 22 versehen sein.

Diese Randbereiche der Grundplatte 21 sind mit Abkantungen 25 versehen, die über die Stirnseiten der Befestigungsränder 23 vorstehen und das Anbringen einer Rückwand und einer Schranktüre am Basis-Rahmengestell 60 erleichtern. Die Grundplatte 21 des Abdeckelementes 20 ragt auch an den Außenseiten der Befestigungsränder 23 vor und bildet mit dieser eine Aufnahme 24, die das Anbringen von Seitenwänden am Basis-Rahmengestell 60 erleichtert. Dabei können auch an den freien Kanten der Befestigungsränder 23 nach außen abgekantete Verbindungsstege 26 mit verwendet werden. Es ist leicht einzusehen, dass das Abdeckelement 20 in einfacher Weise als Blech-Stanz-Biegeteil preisgünstig hergestellt werden kann.

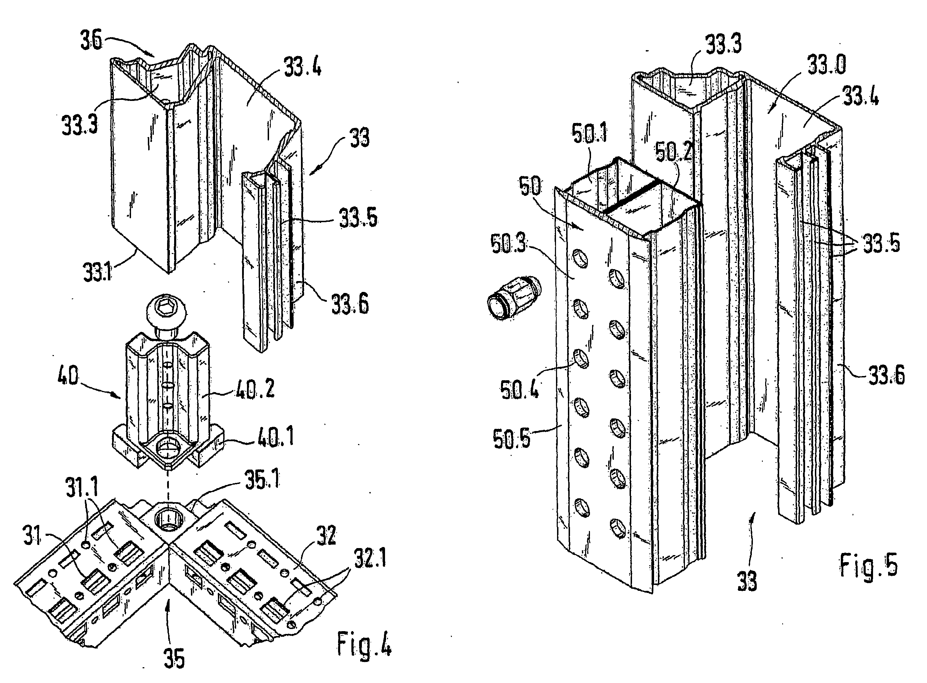

Anhand der Fig. 4 bis 6 wird der Aufbau einer weiteren Baueinheit des Bausatzes erläutert, nämlich einem Schrank-Rahmengestell 30, das auf eine vorgegebene Abmessung in Breite, Tiefe und Höhe ausgelegt ist.

Dabei ist dieses Schrank-Rahmengestell 30 aus identischen Bodenrahmen und Deckenrahmen 35 mit vier vertikalen Rahmenschenkeln 33 zusammengesetzt. Diese identischen Rahmen sind jeweils aus zwei horizontalen Breitenstreben 31 und zwei horizontalen Tiefenstreben 32 zusammengesetzt. In den Eckbereichen der Rahmen 35 sind die aufeinander stoßenden Streben fest miteinander verbunden und bilden Eckaufnahmen 35.1. Die Streben 31 und 32 weisen horizontale und vertikale Profilseiten mit Reihen von Befestigungsaufnahmen 31.1 und 32.1 auf, die sich von den Befestigungsaufnahmen 11.2 der Vertikalrahmen 10 vorzugsweise unterscheiden. In die Eckaufnahmen 35.1 der Rahmen 35 sind Eckverbinder 40 eingesetzt und mit dem Rahmen 35 so verschraubt, dass ein Füllteil 40.1 des Eckverbinders 40 die Eckaufnahme 35.1 so ausfüllt, dass das Füllteil 40.1 mit den horizontalen Profilseiten der Streben 31 und 32 bündig abschließt, so dass der auf das Steckteil 40.2 aufgeschobene vertikale Rahmenschenkel 33 sich darauf abstützen kann.

Wie Fig. 4 zeigt, ist das Steckteil 40.2 auf den Querschnitt eines Hohlraumes 33.3 im Profilteil 33.1 des vertikalen Rahmenschenkels 33 abgestimmt. Dieses Profilteil 33.1 bildet mit der Außenkontur eine zur Diagonale der Eckaufnahme 35.1 eine symmetrische Außenaufnahme 36, die sich über das Füllteil 40.1 des Eckverbinders 40 fortsetzt, und das Anbringen von Verkleidungselementen des Schrank-Rahmengestelles 30 erleichtert.

Wie die Fig. 4 und 5 zeigen, schließt sich an das Profilteil 33.1 ein Profilteil 33.4 an, das einen zum Innenraum des Schrank-Rahmengestelles 30 offenen Kanal 33.0 bildet. Dieser Kanal 33.0 kann als Kabelkanal verwendet werden. Wird er nicht benötigt, dann kann er mit einem Kastenprofil 50 mit Kabelkanälen 50.1 und 50.2 und einer Abschlusswand 50.3 verschlossen werden. Die Abschlusswand 50.3 trägt Reihen von Bohrungen 50.4 und überdeckt mit Abdeckstegen 50.5 den Kanal 33.0 des vertikalen Rahmenschenkels 33.

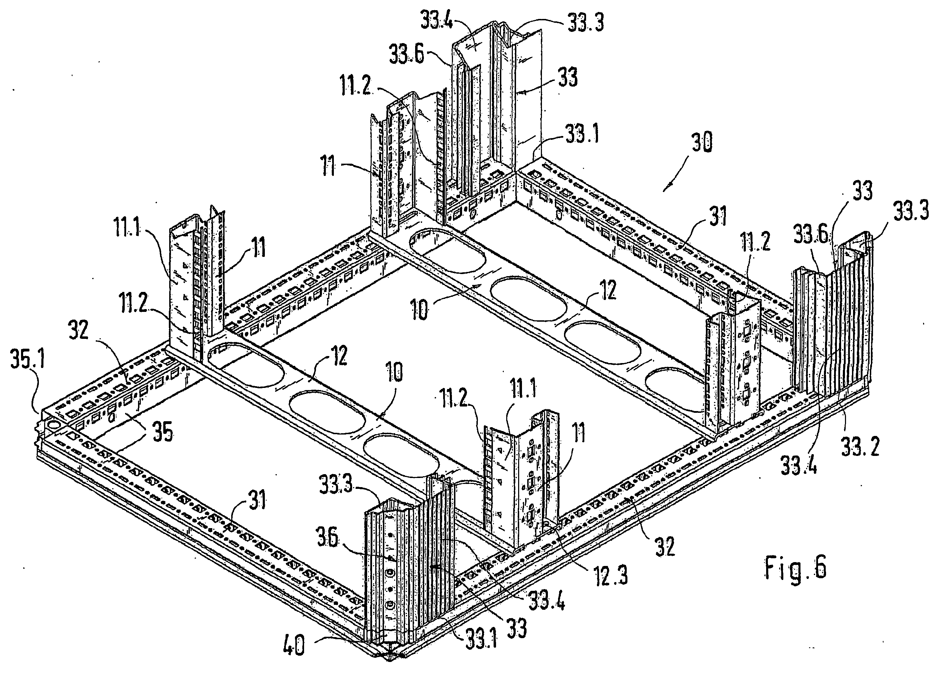

Wie die Fig. 6 erkennen lässt, werden die vertikalen Rahmenschenkel 33 mit vertauschten Stirnseiten 33.1 und 33.2 an den Rahmen 35 befestigt, so dass am Schrank-Rahmengestell 30 die Profilteile 33.4 mit den Tiefenstreben 32 bündig abschließen und gegeneinander gerichtet sind. Durch entsprechende Verdrehung und Vertauschung der Stirnseiten 33.1 und 33.2 der vier vertikalen Rahmenschenkel 33 ist dies einfach möglich und führt zu dem in Fig. 6 angedeuteten Schrank-Rahmengestell 30, dessen oberer Deckenbereich einfach umgekehrt aufgebaut ist.

Mit den Tiefenstreben 32 des unteren und oberen Rahmens 35 werden zwei beabstandete Vertikalrahmen 10 befestigt. Dabei sind die Vertikalrahmen 10 mit den Profilseiten 11.1 und ihren Befestigungsaufnahmen 11.2 auf abgekehrten Seiten der Vertikalrahmen 10 angeordnet und auf ein bestimmtes Abstandsmaß gebracht.

Das nach Fig. 6 angebaute Schrank-Rahmengestell 30 mit zwei Rahmen 35 und vier vertikalen Rahmenschenkeln 33 kann ohne und mit eingebauten Vertikalrahmen ausgelegt werden. Die Vertikalrahmen 10 werden über die Befestigungsaufnahmen 12.3 der Rahmenbreitenstreben 12 mit den Tiefenstreben 32 der Rahmen 35 verbunden. Die Höhe der Vertikalrahmen 10 ist durch den Innenabstand der beiden Rahmen 35 gegeben.

In Fig. 7 ist das Basis-Rahmengestell 60 des Schaltschrankes in perspektiviver Ansicht gezeigt, das aus zwei plattenförmigen horizontalen Abdeckelementen 20 und zwei Vertikalrahmen 10 zusammengesetzt ist. Dabei können die vertikalen Rahmenprofile 11 verschiedene Profilseiten mit Reihen von Befestigungsaufnahmen aufweisen.

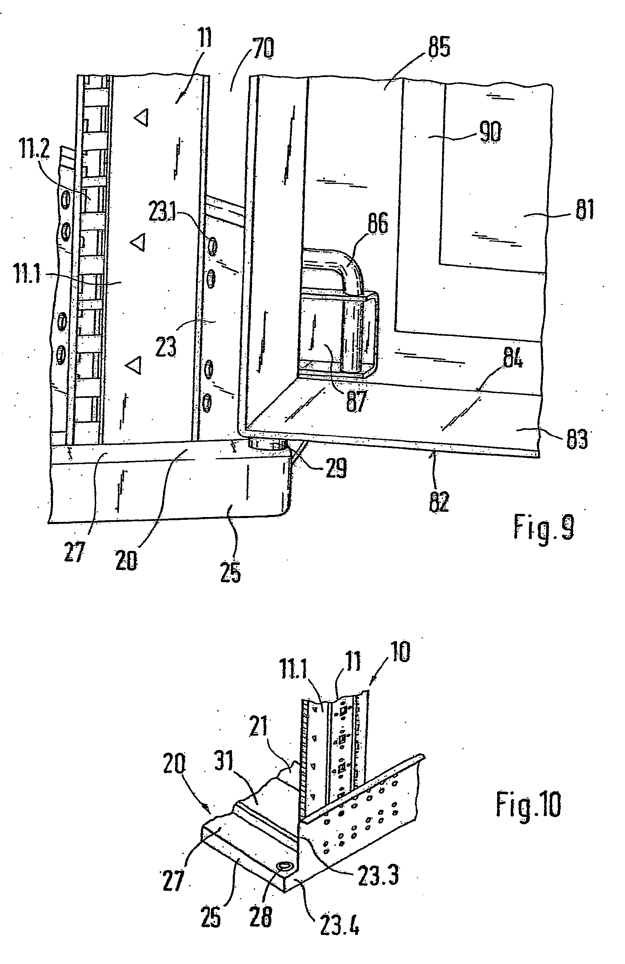

Die Vertikalrahmen 10 werden im Abstand zueinander an abgekanteten und gegeneinander gerichteten Befestigungsrändern 23 der Abdeckelemente 20 befestigt, wobei die Befestigungsränder 23 mit mindestens einer Reihe von Befestigungsaufnahmen 23.1 oder in Richtung der Schranktiefe verlaufenden Langlöchern versehen sind. Die vertikalen Rahmenprofile 11 können dabei gegenüber den Rändern 23.1 (siehe Fig. 10) der Befestigungsränder 33 zurückgesetzt sein. Die senkrecht zu den Befestigungsrändern 23 stehenden Kanten der Abdeckelemente 20 sind L-förmig abgekantet, so dass Ränder 25,27 entstehen, die mit der Grundplatte 21 des Abdeckelementes 20 doppelwandig sind. Dieser Rand kann mit einem dritten Abkantabschitt auch geschlossen sein. Die Befestigungsränder 23 sind mit Ansätzen der Ränder 23.1 versehen, die die abgekanteten Ränder 25,27, seitlich abdecken. Zu bemerken ist noch, dass die vertikalen Rahmeprofile 11 der Vertikalrahmen 10 mit einer Profilseite mit einer Reihe von Befestigungsaufnahmen an den Innenseiten der Befestigungsränder 23 anliegen und mit diesen verbunden sind.

Die Fig. 1 b zeigt eine alternative Ausgestaltung des Abdeckelementes 20, wobei der Rand 25,27 um 180° gefalzt ist. Der Rand 26,27 trägt eine Lagerbuchse 29 mit einer Lageraufnahme 28.

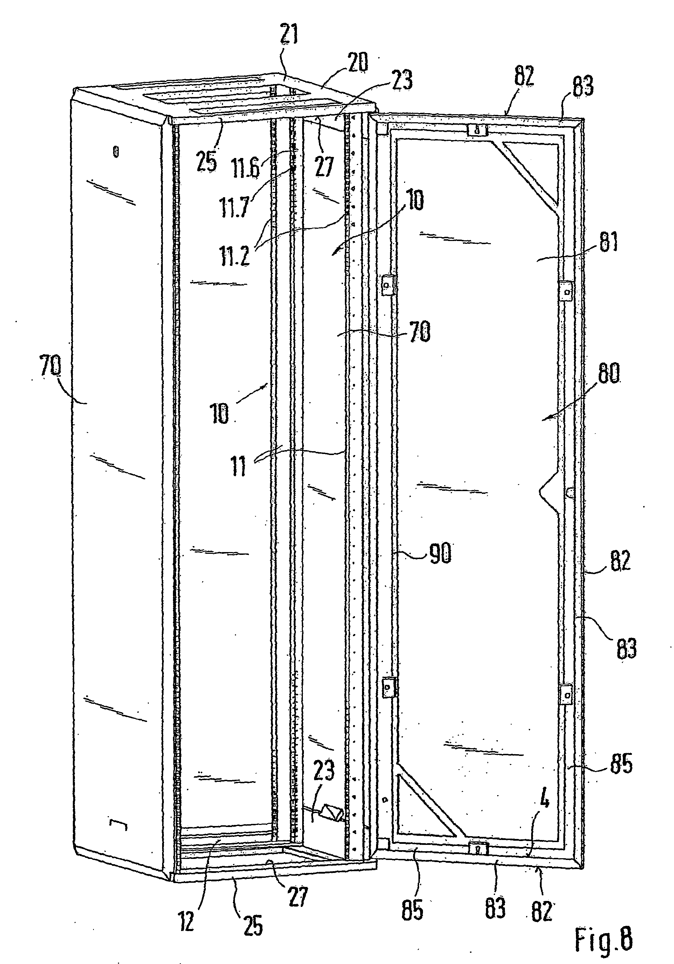

Wie die Fig. 8 zeigt, schließen Wandelemente 70 die beiden Seiten des Basis-Rahmengestelles 60 ab, wobei diese an den Befestigungsrändern 23 der Abdeckelemente 20 befestigt werden. Die Schranktüre 80 ist am Umfang des Türblattes 81 ebenfalls mindestens L-förmig abgekantet, wie der Umfangsrand 82,83 zeigt. Auch dieser Umfangsrand kann mit einem dritten Abkantabschnitt 84 zumindest über weite Teile des Umfanges geschlossen sein. Zudem kann die Innenseite des Türblattes 81 einen Befestigungsrahmen 90 tragen, der im Abstand 85 zum Umfangsrand 82,83 steht und auch ein Dichtungselement aufnehmen kann. Der Befestigungsrahmen 90 trägt Befestigungsaufnahmen und dient gleichzeitig zur Versteifung der Schranktüre 80.

Die Fig. 9 und 10 zeigen Einzelheiten der Anlenkung der Schranktüre 80, wobei darauf hinzuweisen ist, dass die nicht dargestellte obere Anlenkstelle entsprechend spiegelbildlicht ausgelegt ist. Das Abdeckelement 20 steht mit dem abgekanteten Rand 25,27 an der Frontseite des vorderen Vertikalrahmens 10 und auch an der Kante 23.3 des Befestigungsrandes 23 des Abdeckelementes 20 vor. Dabei kann der Abschnitt 27 des abgekanteten Randes, der parallel zur Grundplatte 21 verläuft, mit den Kanten 23.9 der Befestigungsränder 22 abschließen oder über einen dritten Abschnitt bis zur Grundplatte 21 geführt sein. Der Abschnitt 27 kann jedoch auch bis zu den parallelen vorderen Profilseiten der vertikalen Rahmenprofile 11 des vorderen Vertikalrahmens 10 reichen. In den beiden Endbereichen des abgekanteten Randes 25,27 sind Lageraufnahmen 28 eingebracht, in die zusätzlich Lagerbuchsen 29 eingesetzt sein können.

Der Eckbereich der Schranktür-Anlenkseite nimmt ein Scharnierelement 87 mit verstellbarem Scharnierbolzen 86 auf, wie Fig. 9 zeigt. Ist bei dem Scharnierelement 87 der unteren Anlenkstelle der Scharnierbolzen 86 in der gezeigten Stellung nach oben gestellt, dann ragt er nicht aus dem Abschnitt 82 des Umfangrandes 82,83 heraus. Die Schranktüre 80 kann daher auf den abgekanteten Rand 25,27 des unteren Abdeckelementes 20 so aufgesetzt werden, dass der Scharnierbolzen 86 mit dem zurückgezogenen Eingriffsende mit der Lageraufnahme 28 oder Lagerbuchse 29 fluchtet. Dasselbe gilt entsprechend für die obere Anlenkstelle. Die Scharnierbolzen 86 werden axial verstellt und mit ihren Eingriffsenden in die Lageraufnahmen 28 oder Lagerbuchsen 29 der abgekanteten Ränder 25,27 der Abdeckelemente 20 eingeführt. Dabei können sowohl die Eingriffsstellungen als auch die Nichteingrifsstellungen der Scharnierbolzen 86 in den Scharnierelementen 87 feststellbar und wieder freigebbar sein.

Auf der Schließseite der Schranküre 80 können manuell oder mittels eines Stangenverschlusses verstellbare Schließstangen auf der Rückseite der Schranktüre im Bereich des Umfangsrandes 82,83 angeordnet sein, die in die nicht belegten Lageraufnahmen 28 oder Lagebuchsen 29 der abgekanteten Ränder 25,27, der Abdeckelemente 20 einführbar und wieder herausführbar sind. Damit lässt sich die Schranktüre 80 in der Schließstellung festlegen und aus dieser Schließstellung wieder in die Öffnungsstellung freigeben.

Bei dem Ausführungsbeispiel muss noch einmal darauf hingewiesen werden, dass die Abdeckelemente 20 in ihrer Mittelebene, die parallel zu den Befestigungsrändern 23 verläuft, symmetrisch ausgebildet sind. Dies gilt auch zu der senkrecht dazu stehenden Mittelebene, so dass sie als Bodenelement und als Deckenelement für das Basis-Rahmengestell 60 verwendbar sind. Daher gilt für die Anlenkung der Schranktüre 80 die entsprechende Ausgestaltung an der unteren und oberen Anlenkstelle. Auch für die Anbringung der Schließelemente an der Schranktüre 80 sind die Verhältnisse an dem unteren und oberen Abdeckelement 20 und der unteren und oberen Schließstellung entsprechend.

## Patentansprüche

1. Bausatz zum Erstellen von Rahmenaufbauten für Schaltschränke, bestehend aus:
a) einem Schrank-Rahmengestell (30) aus vier horizontalen Breitenstreben (31), vier horizontalen Tiefenstreben (32) sowie vier vertikalen Rahmenschenkeln (33) mit vorgegebener Breite, Tiefe und Höhe,
b) zwei Vertikalrahmen (10) aus jeweils zwei horizontalen Rahmenbreitenstreben (12) und jeweils zwei vertikalen Rahmenprofilen (11), die in ein Schrank-Rahmengestell (30) einbaubar und mit dessen Tiefenstreben (32) verbindbar sind und
c) Abdeckelementen (20), die als Bodenelement und Deckenelement mit zwei beabstandeten Vertikalrahmen (10) zu einem eigenständigen Basis-Rahmengestell (60) verbindbar sind,
d) wenigstens einer Schranktür (80), die an den Abdeckelementen (20) anscharnierbar ist und die an ihrem Umfang abgekantet ist.

2. Bausatz nach Anspruch 1,
**dadurch gekennzeichnet,**
**dass** die Breitenstreben (31), die Tiefenstreben (32) und die Rahmenschenkel (33) des Schrank-Rahmengestelles (30) Abschnitte jeweils aus identischen Profilen gebildet sind, die in den Eckbereichen des Schrank-Rahmengestelles (30) mittels Eckverbinder (40) fest miteinander verbunden, z.B. verschweißt sind.

3. Bausatz nach Anspruch 1,
**dadurch gekennzeichnet,**
**dass** die Breitenstreben (31) und die Tiefienstreben (32) des Schrank-Rahmengestelles (30) einen festen Bodenrahmen und einen festen Deckenrahmen (35) bilden und
**dass** in den Eckbereichen des Bodenrahmens (35) und des Deckenrahmens (35) die vertikalen Rahmenschenkel (33) angebracht sind und mit den Eckverbindern (40) und dem Boden- und Deckenrahmen (35) eine durchgehende Außenaufnahme (36) bilden.

4. Bausatz nach einem der Ansprüche 1 bis 3,
**dadurch gekennzeichnet,**
**dass** die vertikalen Rahmenprofile (11) der Vertikalrahmen (10) eine Basisprofilseite (11.3) mit mindestens einer Reihe von Befestigungsaufnahmen (11.4) aufweisen, die mit den Stirnseiten der horizontalen Rahmenbreitenstreben (12) abschließen und
**dass** an der Basisprofilseite (11.3) beidseitig Seitenschenkel (11.1 und 11.6) abgekantet sind, die auf die Längsseiten der zugeordneten horizontalen Rahmenbreitenstreben (12) der Vertikalrahmen (10) ausgerichtet und mit diesen verbunden sind.

5. Bausatz nach Anspruch 4,
**dadurch gekennzeichnet,**
**dass** in der Basisprofilseite (11.3) und in den abgekanteten Seitenschenkeln (11.1 und 11.6) der vertikalen Rahmenprofile (11) der Vertikalrahmen (10) jeweils mindestens eine Reihe von identischen Befestigungsaufnahmen in einheitlicher, aufeinander ausgerichteter Teilung eingebracht sind.

6. Bausatz nach Anspruch 4,
**dadurch gekennzeichnet,**
**dass** in der Basisprofilseite (11.3) und in den abgekanteten Seitenschenkeln (11.3 und 11.6) der vertikalen Rahmenprofile (11) der Vertikalrahmen (10) jeweils mindestens eine Reihe von gleichen oder identischen Befestigungsaufnahmen (11.4; 11.2; 11.7) in gleicher oder unterschiedlicher Teilung eingebracht sind.

7. Bausatz nach einem der Ansprüche 1 bis 6,
**dadurch gekennzeichnet,**
**dass** die horizontalen Rahmenbreitenstreben (12) und die vertikalen Rahmenprofile (11) der Vertikalrahmen (10) in den Eckbereichen fest miteinander verbunden, z.B. verschweißt sind.

8. Bausatz nach einem der Ansprüche 1 bis 7,
**dadurch gekennzeichnet,**
**dass** die horizontalen Rahmenbreitenstreben (12) der Vertikalrahmen (10) mit Kabeleinführungs-Durchbrüchen (12.2) versehen sind und
**dass** die beiden Vertikalrahmen (10) über Befestigungsaufnahmen (12.3) der horizontalen Rahmenbreitenstreben (12) mit den zugekehrten Oberseiten der horizontalen Tiefenstreben (32) des Schrank-Rahmengestelles (30) in verschiedenen Abständen zueinander verbindbar sind.

9. Bausatz nach Anspruch 8,
**dadurch gekennzeichnet,**
**dass** die Abdeckelemente (20) in ihren Grundplatten (21) über den horizontalen Rahmenbreitenstreben (12) der Vertikalrahmen (10) im Basis-Rahmengestell (60) mit Kabeleinführungs-Aussparungen (21.1) versehen sind.

10. Bausatz nach Anspruch 9,
**dadurch gekennzeichnet,**
**dass** die Befestigungsränder (23) der Abdeckelemente (20) an ihren freien Kanten nach außen abgekantete Verbindungsstege (26) tragen und
über die Grundplatte (21) der Abdeckelemente (20) über die Befestigungsränder (23) vorstehen und mit den Verbindungsstegen (26) Aufnahmen (24) zum Anbringen von Seitenwänden am Basis-Rahmengestell (60) bilden.

11. Bausatz nach einem der Ansprüche 9 oder 10,
**dadurch gekennzeichnet,**
**dass** die Grundplatten (21) der Abdeckelemente (20) an den senkrecht zu den Befestigungsrändern (23) verlaufenden Seiten vorstehen und Abkantungen (25) aufweisen, an denen eine Schranktüre anlenkbar und verschließbar ist sowie eine Rückwand befestigbar ist.

12. Bausatz nach einem der Ansprüche 9 bis 11,
**dadurch gekennzeichnet,**
**dass** die Grundplatten (21) der Abdeckelemente (20) mit einem zentrischen Durchbruch (21.2) und in den Eckbereichen mit Befestigungsbohrungen (22) versehen sind.

13. Bausatz nach einem der Ansprüche 1 bis 12,
**dadurch gekennzeichnet,**
**dass** das Schrank-Rahmengestell (30) aus einem identischen Bodenrahmen (35) und einem identischen Deckenrahmen (35) gebildet ist, die mit abstehenden Eckverbindern (40) gegeneinander gerichtet und über die vier vertikalen Rahmenschenkel (33) miteinander zum Schrank-Rahmengestell (30) verbunden sind.

14. Bausatz nach Anspruch 13,
**dadurch gekennzeichnet,**
**dass** die vertikalen Rahmenschenkel (33) des Schrank-Rahmengestelles (30) einen Profilteil mit einer Steckaufnahme (33.3) für das Steckteil (40.2) der Eckverbinder (40) aufweisen, wobei das Profilteil mit der Außenkontur die Außenaufnahme (36) bildet, die symmetrisch zur Diagonalebene des Boden- und des Deckenrahmens (35) ausgebildet ist.

15. Bausatz nach Anspruch 13 oder 14,
**dadurch gekennzeichnet,**
**dass** der Boden- und der Deckenrahmen (35) des Schrank-Rahmengestelles (30) Eckaufnahmen (35.1) aufweisen, in die die Eckverbinder (40) mit einem Füllteil (40.1) einsetzbar und mit dem Boden- bzw. dem Deckenrahmen (35) verbindbar sind, wobei die Füllteile (40.1) der Eckverbinder (40) mit ihren Au-βenkonturen die Außenaufnahmen (36) der vertikalen Rahmenprofile (33) des Schrank-Rahmengestelles (30) über den Boden- und den Deckenrahmen (35) hinaus verlängern.

16. Bausatz nach einem der Ansprüche 13 oder 14,
**dadurch gekennzeichnet,**
**dass** die vertikalen Rahmenprofile (33) des Schrank-Rahmengestelles (30) mit ihren Stirnseiten (33.1; 33.2) auf den einander zugekehrten Seiten des Boden- und des Deckenrahmens (35) und der Füllteile (40.1) der Eckverbinder (40) aufstehend mit dem Boden- und dem Deckenrahmen (35) verbunden sind.

17. Bausatz nach einem der Ansprüche 13 oder 14,
**dadurch gekennzeichnet,**
**dass** die vertikalen Rahmenprofile (33) des Schrank-Rahmengestelles (30) zwischen dem Boden- und dem Deckenrahmen (35) eine zum Innenraum des Schrank-Rahmengestelles (30) hin offenen Kanal (33.0) bilden, der mittels eines Kastenprofils (50) verschließbar ist, und
**dass** dieses Kastenprofil (50) Vertikalkanäle (50.1, 50.2) aufweist und in der Abschlusswand (50.3) mit Reihen von Bohrungen (50.4) versehen ist.

18. Bausatz nach Anspruch 17,
**dadurch gekennzeichnet,**
**dass** die Abschlusswand (50.3) des Kastenprofils (50) mit Abdeckstegen (50.5) den Kanal (33.0) im vertikalen Rahmenprofil (33) des Schrank-Rahmengestelles (30) überdeckt.

19. Bausatz nach Anspruch 17,
**dadurch gekennzeichnet,**
**dass** die den Kanal (33.0) bildende Profilseite (33.4) des vertikalen Rahmenprofils (33) auf der Außenseite der freien Profilseite (33.6) angeformte Verbindungsstege (33.5) trägt.

20. Bausatz nach einem der Ansprüche 1 bis 19,
**dadurch gekennzeichnet,**
**dass** die Schranktüre (80) mit einem abgekanteten Rand (82,83) versehen ist, der in den Eckbereichen der Scharnierseite der Schanktüre (80) Scharnierelemente (87) mit den in die Lageraufnahmen (28) der Abdeckelemente (20) des Basis-Rahmengestelles (60) einführbaren Scharnierbolzen (86) aufnimmt, und
**dass** die Scharnierbolzen (86) in den Scharnierelementen (87) axial begrenzt verstellbar und zumindest in der Eingriffsstellung mit der zugekehrten Lageraufnahme (28) oder Lagerbuchse (29) an der Abkantung (25) der Abdeckelemente (20) unverschiebbar festlegbar sind.

21. Bausatz nach einem der Ansprüche 1 oder 20,
**dadurch gekennzeichnet,**
**dass** die Befestigungsrärtder (23) der Abdeckelemente (20) mit ihren Endkanten (23.3) um mindestens einen Betrag gegenüber der Abkantung (25) zurückgesetzt sind, der mindestens der Abmessung der ersten Türabkantung (82) entspricht, die senkrecht zum Türblatt (1) gerichtet ist.

22. Bausatz nach einem der Ansprüche 1 oder 20,
**dadurch gekennzeichnet,**
**dass** in die Lageraufnahmen (28) in den Abkantungen (25) der Abdeckelemente (20) Lagerbuchsen (29) eingesetzt sind.

23. Bausatz nach einem der Ansprüche 1 oder 20,
**dadurch gekennzeichnet,**
**dass** die Schließseite der Schranktüre (80) manuell oder mittels eines Stangenverschlusses verstellbare Schließstangen trägt, die in die Lageraufnahme (28) oder Lagerbuchsen (29) der Abkantungen (25) der Abdeckelemente (20) des Basis-Rahmengestelles (60) einführbar und aus diesen herausführbar sind.

## Claims

1. Construction kit for producing frame accessories for switchgear cabinets, comprising:
a) a cabinet rack (30) comprising four horizontal width straps (31), four horizontal depth struts (32) and four vertical frame limbs (33) with a predetermined width, depth and height,
b) two vertical frames (10) comprising in each case two horizontal frame width struts (12) and in each case two vertical frame profiles (11), which can be built into a cabinet rack (30) and can be connected to the depth struts (32) thereof,
c) covering elements (20), which can be connected, in the form of a bottom element and a top element, to two spaced-apart vertical frames (10) to form an independent basic rack (60), and
d) at least one cabinet door (80), which can be hinge-connected to the covering elements (20) and which is bevelled at its circumference.

2. Construction kit according to Claim 1, **characterized in that** the width struts (31), the depth struts (32) and the frame limbs (33) of the cabinet rack (30) are formed by sections in each case of identical profiles, which are fixedly connected to one another, for example welded to one another, in the corner regions of the cabinet rack (30) by means of corner connectors (40).

3. Construction kit according to Claim 1, **characterized in that** the width struts (31) and the depth struts (32) of the cabinet rack (30) form a fixed bottom frame and a fixed top frame (35), and **in that** the vertical frame limbs (33) are fitted in the corner regions of the bottom frame (35) and the top frame (35) and form a continuous outer receptacle (36) with the corner connectors (40) and the bottom and top frame (35).

4. Construction kit according to one of Claims 1 to 3, **characterized in that** the vertical frame profiles (11) of the vertical frames (10) have a basic profile side (11.3) with at least one row of fixing receptacles (11.4), which terminate with the end sides of the horizontal frame width struts (12), and **in that** side limbs (11.1 and 11.6) are bevelled on both sides on the basic profile side (11.3), which side limbs are aligned with the longitudinal sides of the associated horizontal frame width struts (12) of the vertical frames (10) and are connected thereto.

5. Construction kit according to Claim 4, **characterized in that** in each case at least one row of identical fixing receptacles with a uniform spacing which is aligned with one another are introduced into the basic profile side (11.3) and into the bevelled side limbs (11.1 and 11.6) of the vertical frame profiles (11) of the vertical frames (10).

6. Construction kit according to Claim 4, **characterized in that** in each case at least one row of identical fixing receptacles (11.4; 11.2; 11.7) with identical or different spacing are introduced into the basic profile side (11.3) and into the bevelled side limbs (11.3 and 11.6) of the vertical frame profiles (11) of the vertical frames (10).

7. Construction kit according to one of Claims 1 to 6, **characterized in that** the horizontal frame width struts (12) and the vertical frame profiles (11) of the vertical frames (10) are connected fixedly to one another, for example welded to one another, in the corner regions.

8. Construction kit according to one of Claims 1 to 7, **characterized in that** the horizontal frame width struts (12) of the vertical frames (10) are provided with cable insertion apertures (12.2), and **in that** the two vertical frames (10) can be connected to one another at different spacings via fixing receptacles (12.3) of the horizontal frame width struts (12) with the facing upper sides of the horizontal depth struts (32) of the cabinet rack (30).

9. Construction kit according to Claim 8, **characterized in that** the covering elements (20) are provided with cable insertion cutouts (21.1) in their base plates (21) over the horizontal frame width struts (12) of the vertical frames (10) in the basic rack (60).

10. Construction kit according to Claim 9, **characterized in that** the fixing edges (23) of the covering elements (20) bear outwardly bevelled connecting webs (26) at their free edges and protrude over the base plate (21) of the covering elements (20) over the fixing edges (23) and, with the connecting webs (26), form receptacles (24) for attaching side walls to the basic rack (60).

11. Construction kit according to either of Claims 9 and 10, **characterized in that** the base plates (21) of the covering elements (20) protrude on the sides running at right angles to the fixing edges (23) and have bevelled portions (25), on which a cabinet door can be articulated and closed and to which a rear wall can be fixed.

12. Construction kit according to one of Claims 9 to 11, **characterized in that** the base plates (21) of the covering elements (20) are provided with a central aperture (21.2) and with fixing holes (22) in the corner regions.

13. Construction kit according to one of Claims 1 to 12, **characterized in that** the cabinet rack (30) is formed from an identical bottom frame (35) and an identical top frame (35), which are directed towards one another with protruding corner connectors (40) and are connected to one another via the four vertical frame limbs (33) so as to form the cabinet rack (30).

14. Construction kit according to Claim 13, **characterized in that** the vertical frame limbs (33) of the cabinet rack (30) have a profile part with a plug-type receptacle (33.3) for the plug-type part (40.2) of the corner connectors (40), the profile part with the outer contour forming the outer receptacle (36), which is designed to be symmetrical with the diagonal plane of the bottom and the top frame (35).

15. Construction kit according to Claim 13 or 14, **characterized in that** the bottom and the top frame (35) of the cabinet rack (30) have corner receptacles (35.1), into which the corner connectors (40) with a filling part (40.1) can be inserted and can be connected to the bottom or the top frame (35), the filling parts (40.1) of the corner connectors (40) with their outer contours extending the outer receptacles (36) of the vertical frame profiles (33) of the cabinet rack (30) beyond the bottom and the top frame (35).

16. Construction kit according to either of Claims 13 and 14, **characterized in that** the vertical frame profiles (33) of the cabinet rack (30) are connected with their end sides (33.1; 33.2) on mutually facing sides of the bottom and the top frame (35) and the filling parts (40.1) of the corner connectors (40) vertically to the bottom and the top frame (35).

17. Construction kit according to either of Claims 13 and 14, **characterized in that** the vertical frame profiles (33) of the cabinet rack (30) form, between the bottom and the top frame (35), a channel (33.0) which is open towards the interior of the cabinet rack (30) and can be closed by means of a box profile (50), and **in that** this box profile (50) has vertical channels (50.1, 50.2) and is provided with rows of holes (50.4) in the terminating wall (50.3).

18. Construction kit according to Claim 17, **characterized in that** the terminating wall (50.3) of the box profile (50) covers the channel (33.0) in the vertical frame profile (33) of the cabinet rack (30) with covering webs (50.5).

19. Construction kit according to Claim 17, **characterized in that** the profile side (33.4) forming the channel (33.0) of the vertical frame profile (33) bears connecting webs (33.5), which are integrally formed on the outside of the free profile side (33.6).

20. Construction kit according to one of Claims 1 to 19, **characterized in that** the cabinet door (80) is provided with a bevelled edge (82, 83), which, in the corner regions of the hinge side of the cabinet door (80), accommodates hinge elements (87) with the hinge bolts (86) which can be inserted into the bearing receptacles (28) of the covering elements (20) of the basic rack (60), and **in that** the hinge bolts (86) are displaceable axially to a limited extent in the hinge elements (87) and can be fixed in such a way that they cannot be displaced at least in the engaged position with the facing bearing receptacle (28) or bearing bush (29) on the bevelled portion (25) of the covering elements (20).

21. Construction kit according to either of Claims 1 and 20, **characterized in that** the fixing edges (23) of the covering elements (20) are set back with their end edges (23.3) with respect to the bevelled portion (25) by at least an amount which corresponds to at least the dimension of the first door bevelled portion (82), which is directed at right angles with respect to the door leaf (1).

22. Construction kit according to either of Claims 1 and 20, **characterized in that** bearing bushes (29) are inserted into the bearing receptacles (28) in the bevelled portions (25) of the covering elements (20).

23. Construction kit according to either of Claims 1 and 20, **characterized in that** the closing side of the cabinet door (80) bears closing rods, which can be adjusted manually or by means of a rod closure and can be inserted into and removed from the bearing receptacle (28) or bearing bushes (29) of the bevelled portions (25) of the covering elements (20) of the basic rack (60).

## Revendications

1. Jeu de pièces détachées permettant la construction d'une superstructure de châssis pour des armoires électriques, se composant de:
a) une baie d'armoire (30) composée de quatre entretoises de largeur horizontales (31), quatre entretoises de profondeur horizontales (32) ainsi que quatre montants de châssis verticaux (33), de largeur, profondeur et hauteur prédéterminées;
b) deux châssis verticaux (10) composés chacun de deux entretoises de largeur de châssis horizontales (12) et de deux profilés de châssis verticaux (11), qui peuvent être intégrés dans une baie d'armoire (30) et qui peuvent être assemblés aux entretoises de profondeur (32) de celle-ci, et
c) des éléments de couverture (20), qui peuvent être assemblés, comme élément de base et élément de plafond, avec deux châssis verticaux espacés (10) en une baie de base autonome (60),
d) au moins une porte d'armoire (80), qui peut être articulée par des charnières aux éléments de couverture (20) et qui est repliée à sa périphérie.

2. Jeu de pièces détachées selon la revendication 1, **caractérisé en ce que** les entretoises de largeur (31), les entretoises de profondeur (32) et les montants de châssis (33) de la baie d'armoire (30) sont chaque fois formés par des segments de profilés identiques, qui sont solidement assemblés les uns aux autres, par exemple soudés, dans les régions d'angle de la baie d'armoire (30) au moyen de coins d'assemblage (40).

3. Jeu de pièces détachées selon la revendication 1, **caractérisé en ce que** les entretoises de largeur (31) et les entretoises de profondeur (32) de la baie d'armoire (30) forment un cadre de base solide et un cadre de plafond solide (35), et **en ce que** les montants de châssis verticaux (33) sont placés dans les régions d'angle du cadre de base (35) et du cadre de plafond (35) et forment, avec les coins d'assemblage (40) et le cadre de base et le cadre de plafond (35) un logement extérieur ininterrompu (36).

4. Jeu de pièces détachées selon l'une quelconque des revendications 1 à 3, **caractérisé en ce que** les profilés de châssis verticaux (11) des châssis verticaux (10) présentent une face de profilé de base (11.3) avec au moins une série de logements de fixation (11.4), qui se verrouillent avec les faces frontales des entretoises de largeur de châssis horizontales (12), et **en ce que** des ailes latérales (11.1 et 11.6) sont repliées sur les deux côtés de la face de profilé de base (11.3), sont alignées sur les côtés longitudinaux des entretoises de largeur de châssis horizontales associées (12) des châssis verticaux (10) et sont assemblées à ces dernières.

5. Jeu de pièces détachées selon la revendication 4, **caractérisé en ce qu'**au moins une série de logements de fixation identiques avec un pas unique, alignés l'un avec l'autre, sont respectivement pratiqués dans la face de profilé de base (11.3) et dans les ailes latérales repliées (11.1 et 11.6) des profilés de châssis verticaux (11) des châssis verticaux (10).

6. Jeu de pièces détachées selon la revendication 4, **caractérisé en ce qu'**au moins une série de logements de fixation égaux ou identiques (11.4; 11.2; 11.7) avec un pas identique ou différent sont respectivement pratiqués dans la face de profilé de base (11.3) et dans les ailes latérales repliées (11.1 et 11.6) des profilés de châssis verticaux (11) des châssis verticaux (10).

7. Jeu de pièces détachées selon l'une quelconque des revendications 1 à 6, **caractérisé en ce que** les entretoises de largeur de châssis horizontales (12) et les profilés de châssis verticaux (11) des châssis verticaux (10) sont solidement assemblés l'un à l'autre, par exemple soudés, dans les régions d'angle.

8. Jeu de pièces détachées selon l'une quelconque des revendications 1 à 7, **caractérisé en ce que** les entretoises de largeur de châssis horizontales (12) des châssis verticaux (10) sont pourvues de passages d'entrée de câbles (12.2) et **en ce que** les deux châssis verticaux (10) peuvent être assemblés l'un à l'autre à des distances différentes par des logements de fixation (12.3) des entretoises de largeur de châssis horizontales (12) avec les faces supérieures conjuguées des entretoises de profondeur horizontales (32) de la baie d'armoire (30).

9. Jeu de pièces détachées selon la revendication 8, **caractérisé en ce que** les éléments de couverture (20) sont pourvus de découpes d'entrée de câbles (21.1) dans leurs plaques de base (21) au-dessus des entretoises de largeur de châssis horizontales (12) des châssis verticaux (10) dans la baie de base (60).

10. Jeu de pièces détachées selon la revendication 9, **caractérisé en ce que** les bords de fixation (23) des éléments de couverture (20) portent sur leurs arêtes libres des nervures d'assemblage (26) repliées vers l'extérieur et sont saillants au-dessus de la plaque de base (21) des éléments de couverture (20) par les bords de fixation (23) et forment avec les nervures d'assemblage (26) des logements (24) pour la pose de parois latérales sur la baie de base (60).

11. Jeu de pièces détachées selon la revendication 9 ou 10, **caractérisé en ce que** les plaques de base (21) des éléments de couverture (20) sont saillantes sur les côtés perpendiculaires aux bords de fixation (23) et présentent des rebords (25), sur lesquels une porte d'armoire peut être articulée et verrouillée et une paroi arrière peut être fixée.

12. Jeu de pièces détachées selon l'une quelconque des revendications 9 à 11, **caractérisé en ce que** les plaques de base (21) des éléments de couverture (20) sont pourvues d'une ouverture centrale (21.2) et de trous de fixation (22) dans les régions d'angle.

13. Jeu de pièces détachées selon l'une quelconque des revendications 1 à 12, **caractérisé en ce que** la baie d'armoire (30) est formée d'un cadre de base identique (35) et d'un cadre de plafond identique (35), qui sont orientés l'un vers l'autre avec des coins d'assemblage saillants (40) et qui sont reliés l'un à l'autre en une baie d'armoire (30) par les quatre montants de châssis verticaux (33).

14. Jeu de pièces détachées selon la revendication 13, **caractérisé en ce que** les montants de châssis verticaux (33) de la baie d'armoire (30) présentent une partie de profilé avec un logement à emboîtement (33.3) pour la partie à emboîter (40.2) des coins d'assemblage (40), dans lequel la partie de profilé forme avec le contour extérieur le logement extérieur (36), qui est symétrique par rapport au plan diagonal du cadre de base et du cadre de plafond (35).

15. Jeu de pièces détachées selon la revendication 13 ou 14, **caractérisé en ce que** le cadre de base et le cadre de plafond (35) de la baie d'armoire (30) présentent des logements d'angle (35.1), dans lesquels les coins d'assemblage (40) peuvent être introduits et peuvent être assemblés au cadre de base ou au cadre de plafond (35) avec une partie de remplissage (40.1), dans lequel les parties de remplissage (40.1) des coins d'assemblage (40) prolongent avec leurs contours extérieurs les logements extérieurs (36) des profilés de châssis verticaux (33) de la baie d'armoire (30) au-delà du cadre de base et du cadre de plafond (35).

16. Jeu de pièces détachées selon la revendication 13 ou 14, **caractérisé en ce que** les profilés de châssis verticaux (33) de la baie d'armoire (30) sont assemblés au cadre de base et au cadre de plafond (35) en position dressée avec leurs faces frontales (33.1; 33.2) sur les faces tournées l'une vers l'autre du cadre de base et du cadre de plafond (35) et des parties de remplissage (40.1) des coins d'assemblage (40).

17. Jeu de pièces détachées selon la revendication 13 ou 14, **caractérisé en ce que** les profilés de châssis verticaux (33) de la baie d'armoire (30) forment, entre le cadre de base et le cadre de plafond (35), un canal (33.0) ouvert vers l'espace intérieur de la baie d'armoire (30), qui peut être obturé au moyen d'un profilé creux (50), et **en ce que** ce profilé creux (50) présente des canaux verticaux (50.1, 50.2) et est pourvu de séries de trous (50.4) dans la paroi de fermeture (50.3).

18. Jeu de pièces détachées selon la revendication 17, **caractérisé en ce que** la paroi de fermeture (50.3) du profilé creux (50) recouvre avec des nervures de couverture (50.5) le canal (33.0) dans le profilé de châssis vertical (33) de la baie d'armoire (30).

19. Jeu de pièces détachées selon la revendication 17, **caractérisé en ce que** la face de profilé (33.4) formant le canal (33.0) du profilé de châssis vertical (33) porte des nervures d'assemblage (33.5) formées sur la face extérieure de la face libre du profilé (33.6).

20. Jeu de pièces détachées selon l'une quelconque des revendications 1 à 19, **caractérisé en ce que** la porte d'armoire (80) est pourvue d'un bord replié (82, 83), qui contient dans les régions d'angle du côté des charnières de la porte d'armoire (80) des éléments de charnière (87) avec les boulons de charnière (86) à introduire dans les logements d'appui (28) des éléments de couverture (20) de la baie de base (60), et **en ce que** les boulons de charnière (86) sont réglables axialement de façon limitée dans les éléments de charnière (87) et peuvent être fixés en position stationnaire au moins dans la position d'engagement avec le logement d'appui (28) ou le coussinet (29) conjugué sur le rebord (25) des éléments de couverture (20).

21. Jeu de pièces détachées selon la revendication 1 ou 20, **caractérisé en ce que** les bords de fixation (23) des éléments de couverture (20) sont en retrait avec leurs arêtes d'extrémité (23.3), par rapport au rebord (25), d'au moins une quantité qui correspond au moins à la dimension du premier rebord de porte (82), qui est orienté perpendiculairement à la feuille de porte (1).

22. Jeu de pièces détachées selon la revendication 1 ou 20, **caractérisé en ce que** des coussinets (29) sont introduits dans les logements d'appui (28) dans les rebords (25) des éléments de couverture (20).

23. Jeu de pièces détachées selon la revendication 1 ou 20, **caractérisé en ce que** le côté de fermeture de la porte d'armoire (80) porte des tringles de fermeture déplaçables manuellement ou au moyen d'un verrou de tringle, qui peuvent être introduites dans le logement d'appui (28) ou les coussinets (29) des rebords (25) des éléments de couverture (20) de la baie de base (60), ou qui peuvent en être extraites.
